Europäisches Patentamt

European Patent Office

Office européen des brevets

(11) Numéro de publication: **0 305 635 B1**

(12) **FASCICULE DE BREVET EUROPEEN**

(45) Date de publication de fascicule du brevet: **06.05.92**    (51) Int. Cl.⁵: **B29C 47/00**, B65D 53/02

(21) Numéro de dépôt: **88103898.8**

(22) Date de dépôt: **09.07.86**

(60) Numéro de publication de la demande initiale
en application de l'article 76 CBE : **0 209 454**

(54) **Procédé de production d'un joint d'étanchéité.**

(30) Priorité: **17.07.85 FR 8510941**

(43) Date de publication de la demande:
**08.03.89 Bulletin  89/10**

(45) Mention de la délivrance du brevet:
**06.05.92 Bulletin  92/19**

(84) Etats contractants désignés:
**DE IT**

(56) Documents cités:
EP-A- 0 040 824    FR-A- 1 217 209
FR-A- 1 550 848    GB-A- 1 236 097
US-A- 3 264 393    US-A- 3 953 661

(73) Titulaire: **HUTCHINSON**
**2 rue Balzac**
**F-75008 Paris(FR)**

(72) Inventeur: **Auberger, Claude**
**189, rue E. Mengin**
**F-45000 Montargis(FR)**
Inventeur: **Michel, Claude**
**31, rue P. Painlevé**
**F-45000 Montargis(FR)**
Inventeur: **Thomas, André**
**16, rue de la Ouintaine**
**F-45000 Montargis(FR)**

(74) Mandataire: **Orès, Bernard**
**Cabinet ORES 6, Avenue de Messine**
**F-75008 Paris(FR)**

# Description

La présente invention est relative à des perfectionnements apportés aux joints qui assurent l'étanchéité entre le corps et le couvercle de bocaux de conserves ou récipients analogues, notamment de bocaux en verre.

Le principe de la stérilisation à domicile des produits alimentaires est bien connu et largement utilisé.

Les aliments à conserver sont placés dans un bocal en verre muni d'un couvercle. Une rondelle en caoutchouc, présentant en général une zone de préhension latérale appelée "nez" assure l'étanchéité entre le bocal et son couvercle.

Pendant la stérilisation l'air contenu dans le bocal en verre s'échappe sous l'effet de la surpression intérieure due à l'élévation de température. L'armature métallique qui assemble le bocal et son couvercle est toujours conçue de façon à présenter une élasticité suffisante pour ne pas s'opposer à cette évacuation d'air.

Après refroidissement, la pression atmosphérique qui appuie sur le couvercle n'est plus équilibrée par une pression interne de même valeur. Il en résulte que le couvercle comprime fortement la rondelle en caoutchouc, ce qui empêche tout retour d'air dans le bocal.

Cette méthode de conservation par stérilisation, tout comme la méthode de conservation sous vide d'ailleurs, produit une dépression à l'intérieur du récipient, tel que bocal. Le maintien du couvercle sur le récipient est assuré par la différence de pression entre l'extérieur qui se trouve à la pression atmosphérique et l'intérieur.

Pour ouvrir le bocal ou analogue en vue de la consommation de son contenu, il faut :

- soit créer un effort suffisant de séparation du couvercle et du corps en se servant de l'armature métallique comme d'un levier, pour appliquer sur le couvercle une force de séparation supérieure à la force créée par la pression atmosphérique appuyant sur le couvercle.

- soit faire pénétrer à l'intérieur du récipient la quantité d'air nécessaire pour rétablir l'équilibre entre les pressions interne et externe en arrachant la rondelle en caoutchouc sur une partie de la périphérie du couvercle.

Dans les deux cas cette opération d'ouverture a toujours présenté beaucoup de difficultés pour les ménagères.

En effet, dans le premier cas, la difficulté réside en ce que comme l'armature métallique doit présenter une élasticité suffisante pour ne pas s'opposer à la sortie de l'air pendant la stérilisation, ceci constitue une raison suffisante pour que cette même armature manque de rigidité quand on s'en sert comme levier pour soulever le couvercle maintenu fortement appuyé par la pression atmosphérique. On constate qu'effectivement l'armature se déforme progressivement à chaque ouverture et remplit de plus en plus mal son office de multiplicateur de force. La conséquence en est que rares sont les ménagères qui ont une force suffisante dans les mains pour ouvrir leurs bocaux par ce procédé.

Dans le second cas, en tirant fortement sur le nez de la rondelle en caoutchouc, on peut sortir vers l'extérieur une partie de cette rondelle et créer ainsi un passage d'air de l'extérieur vers l'intérieur du bocal. Dès que l'air a rempli le bocal pour rétablir dans celui-ci la pression atmosphérique, on peut aisément soulever le couvercle.

Mais là encore la force nécessaire pour arracher localement la rondelle est plus importante que celle qu'une ménagère peut développer habituellement avec ses doigts. En pratique, celle-ci va s'aider d'instruments qu'elle trouve à portée de la main (pinces, tournevis, lame de couteau, manche de cuillère, etc...) instruments qui ne sont pas adaptés à l'opération à réaliser et qui ont souvent pour résultat d'ébrécher et de rendre inutilisable le bocal en verre.

On a déjà proposé, pour pallier ces inconvénients, de ménager sur le joint une ligne de moindre résistance susceptible de se rompre par traction sur une partie extérieure de préhension. Dans une réalisation déjà envisagée par la Demanderesse, dans FR-A-1 217 209, la ligne de moindre résistance est une fente qui règne ou non sur la totalité de la largeur du joint. Une telle fente diminue nécessairement l'épaisseur du joint de sorte que peut se poser le problème de la résistance de celui-ci au cours de la stérilisation.

Dans une autre réalisation , telle que décrite par US-A-3 264 393, le joint comprend un corps sous forme d'une bande continue d'un matériau élastomère relié à une queue tangentielle sur un arc important de la circonférence du joint soit par un adhésif, soit par les propriétés de liaison inhérentes d'un matériau élastique. La fabrication d'un tel joint est relativement complexe et la présence d'un adhésif peut constituer un obstacle à l'utilisation du joint pour les stérilisations du type ménager.

La présente invention s'est essentiellement donné pour but de pourvoir à un joint d'étancnéité de bocaux de conserves ou récipients analogues qui réponde mieux aux nécessités de la pratique que les joints d'étanchéité connus, notamment en ce qu'il permet de rétablir la pression atmosphérique dans le bocal par introduction d'air dans ce dernier, sans requérir l'application d'un effort aussi important que par le passé, et sans avoir à utiliser, pour le faire, l'armature métallique, ce qui évite sa déformation. De plus, le joint d'étanchéité conforme à la présente invention est utilisable pour la stérilisation sur tous les bocaux ou analogues en verre, sans nécessiter de modifications ni des bocaux, ni de leur couvercle, ni de l'armature métallique qui constitue leur système de fermeture,ni des méthodes de stérilisation.

La présente invention a pour objet un procédé de production d'un joint d'étanchéité pour un bocal de conserve, notamment en verre, tel q'une rondelle en caoutchouc souple pourvue de moyens de préhension faisant saillie de la rondelle vers l'extérieur et d'une ligne de moindre résistance ménagée sensiblement sur toute la largeur du joint, caractérisé en ce que ledit joint d'étanchéité est produit par extrusion simultanée d'une masse principale de caoutchouc et d'une faible quantité de caoutchouc cru présentant une résistance à la rupture plus faible que la masse principale de caoutchouc, laquelle faible quantité de caoutchouc cru est guidée dans la masse principale de caoutchouc à l'emplacement de ladite ligne de moindre résistance.

La disposition qui précède correspond à la revendication dont le préambule est basé sur le document FR-A-1 217 209 constituant l'état de la technique le plus proche de la présente invention.

La présente invention a également pour objet les joints d'étanchéité obtenus en mettant en oeuvre le procédé selon l'invention.

Un tel joint est d'épaisseur constante sur toute sa surface et est entièrement en caoutchouc, de sorte qu'il ne présente pas les inconvénients des dispositifs évoqués ci-dessus.

Outre les dispositions qui précèdent, l'invention comprend encore d'autres dispositions, qui ressortiront de la description qui va suivre.

L'invention sera mieux comprise à l'aide du complément de description qui va suivre qui se réfère aux dessins annexés dans lesquels :

- la figure 1 est une représentation schématique d'un mode de réalisation d'une projection latérale externe de préhension associée à une rondelle d'étanchéité conforme à la présente invention ;
- la figure 2 représente une autre mode de réalisation d'une projection latérale externe de préhension associée à une rondelle d'étanchéité conforme à la présente invention ;
- la figure 3 est une vue en coupe axiale d'un couvercle de bocal de conserves équipé d'un joint d'étanchéité conforme à la présente invention.

Il doit être bien entendu, toutefois, que ces dessins et les parties descriptives correspondantes, sont donnés uniquement à titre d'illustration de l'objet de l'invention, dont ils ne constituent en aucune manière une limitation.

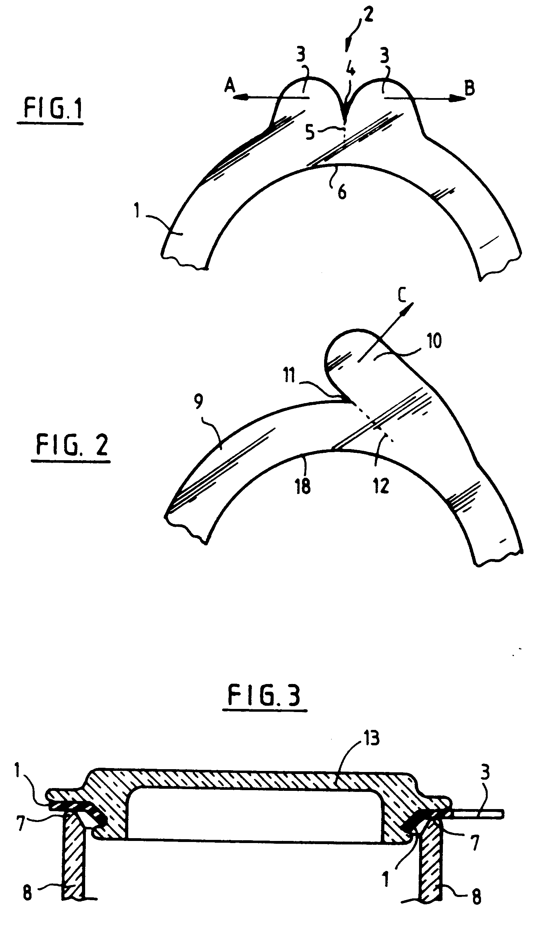

Le joint d'étanchéité représenté à la figure 1 comprend une rondelle 1 en caoutchouc souple, qui est pourvue d'une zone de préhension 2 qui se compose de deux projections latérales 3 au point de jonction 4 desquelles débute une ligne de moindre résistance 5, qui s'étend dudit point de jonction 4 à la périphérie interne 6 de ladite rondelle ou au voisinage de celle-ci. Les flèches A, B indiquent les deux directions suivant lesquelles l'opérateur doit exercer un effort de traction sur les projections 3 pour déchirer la rondelle 1 le long de la ligne de moindre résistance 5, lesquelles directions sont perpendiculaires à la ligne de moindre résistance 5.

Lorsque l'opérateur exerce son effort de traction manuel dans les directions indiquées par les flèches A, B, il déchire progressivement la rondelle 1 le long de la ligne de moindre résistance 5, en direction de l'intérieur ; lorsque la déchirure a dépassé le rebord supérieur 7 du bocal 8, qui sert de surface d'appui à la rondelle d'étanchéité (cf fig. 3) l'air extérieur pénètre dans le bocal, dans lequel la pression atmosphérique est très rapidement rétablie, ce qui permet d'ouvrir le couvercle sans difficulté et sans effort.

Le joint d'étanchéité représenté à la figure 2 comprend une rondelle 9 en caoutchouc souple qui est pourvue d'une zone de préhension qui comprend une projection latérale 10. Au point de jonction 11 de cette projection 10 sur la rondelle 9 débute une ligne de moindre résistance 12 qui aboutit à proximité de la périphérie interne 18 de la rondelle 9 et dont l'orientation est telle qu'elle est perpendiculaire à la direction de la flèche C suivant laquelle l'opérateur doit exercer un effort de traction sur la projection 10 pour déchirer la rondelle 9 le long de la ligne de moindre résistance 12.

De la même manière que dans le cas du joint d'étanchéité représenté à la figure 1, lorsque la déchirure de la ligne 12 en direction de l'intérieur a dépassé le rebord supérieur 7 du bocal 8, l'air entre dans le bocal 8 et facilite l'ouverture du couvercle 13 sans effort.

La figure 2 illustre particulièrement clairement la relation qui existe entre la disposition de la ligne de moindre résistance perpendiculairement à la direction dans laquelle doit s'exercer l'effort de traction sur la projection, et la facilité de la déchirure.

La ligne de moindre résistance n'a aucune incidence sur l'étanchéité assurée par la rondelle, attendu qu'il n'y a pratiquement aucun risque de rupture de la rondelle au niveau de cette ligne de moindre résistance si elle n'est pas sollicitée par un effort de traction, ce qui exclut un risque de rupture au cours de la stérilisation : en effet, lorsque le couvercle est fermé, la rondelle de caoutchouc est soumise, entre le bocal 8 et le couvercle 13, à des forces de compression, qui ne sont pas de nature à déchirer la ligne de moindre résistance dont la déchirure ne peut se produire que sous l'action d'une force de traction.

Les rondelles d'étanchéité de la présente invention sont en caoutchouc souple de type usuel, tel que caoutchouc naturel, caoutchouc SBR, etc...par exemple; elles sont produites par extrusion, les lignes de moindre résistance étant réalisées pendant le processus d'extrusion, par co-extrusion d'un caoutchouc dont la résistance à la rupture est plus faible que celle du caoutchouc qui forme l'essentiel de la rondelle. Les rondelles sont réalisées dans une installation de double-extrusion, qui comporte deux extrudeuses qui débitent dans une tête d'extrusion commune, dans laquelle une faible quantité de caoutchouc cru est guidée dans la masse de la rondelle réalisée en caoutchouc présentant une résistance à la rupture supérieure à celle du caoutchouc cru, de manière à prendre la position et l'orientation souhaitées pour la ligne de moindre résistance. Les compositions de caoutchouc mises en oeuvre en pareil cas, peuvent être de composition identique ou différente.

**Revendications**

1. Procédé de production d'un joint (1) d'étanchéité pour un bocal de conserve (8), notamment en verre, tel qu'une rondelle en caoutchouc souple (1) pourvue de moyens de préhension (3-3;10) faisant saillie de la rondelle vers l'extérieur et d'une ligne de moindre résistance (5;12) ménagée sensiblement sur toute la largeur du joint, caractérisé en ce que ledit joint d'étanchéité est produit par extrusion simultanée d'une masse principale de caoutchouc et d'une faible quantité de caoutchouc cru présentant une résistance à la rupture plus faible que la masse principale de caoutchouc, laquelle faible quantité de caoutchouc cru est guidée dans la masse principale de caoutchouc à l'emplacement de ladite ligne de moindre résistance (5;12).

**Claims**

1. Method for the manufacture of a seal (1) for a preserve jar (8) especially of glass, such as a flexible rubber washer (1) provided with means of gripping (3-3, 10) projecting outwards from the washer, and a line of least resistance (5, 12) made approximately across the entire width of the seal, characterized in that said seal is produced by the simultaneous extrusion of a main mass of rubber and a small amount of raw latex exhibiting a lower breaking strength than the main mass of rubber, said small amount of raw latex being guided in the main mass of rubber at the location of said line of least resistance (5, 12).

**Patentansprüche**

1. Verfahren zur Herstellung einer Abdichtung (1) für ein Konservierungsgefäß (8), insbesondere aus Glas, wie ein Ring aus weichem Gummi (1), der mit Greifmitteln (3-3; 10) versehen ist, die am Ring nach außen überstehen, und mit einer Linie mit geringerem Widerstand (5; 12), die im wesentlichen über die gesamte Breite der Dichtung eingebracht ist, dadurch **gekennzeichnet,** daß die genannte Dichtung durch gleichzeitige Extrusion einer Hauptmasse aus Gummi und einer geringen Menge aus Rohgummi hergestellt wird, der eine schwächere Reißfestigkeit als die Hauptgummimasse aufweist, wobei die genannte geringe Menge aus Rohgummi in die Hauptgummimasse an der Anordnungsstelle der genannten Linie mit geringerer Festigkeit (5; 12) eingeleitet wird.

FIG.1

FIG. 2

FIG.3